# EUROPEAN PATENT SPECIFICATION

(11) **EP 3 502 324 B1**
(45) Date of publication and mention of the grant of the patent: **28.10.2020**
(21) Application number: 17209959.0
(22) Date of filing: 22.12.2017
(51) Int. Cl.: D01F 1/10, B33Y 70/00, B29C 64/118

(54) **A FILAMENT AND A 3D PRINTED ITEM**
FADEN UND 3D-BEDRUCKTES ELEMENT
FILAMENT ET ARTICLE IMPRIMÉ EN 3D

(43) Date of publication of application: 26.06.2019
(73) Proprietor: Carbodeon Ltd Oy, 00100 helsinki (FI); Tiamet Technologies B.V., 3029 AK Rotterdam (NL)
(72) Inventor: MYLLYMÄKI, Vesa, 00210 HELSINKI (FI); LARSON, Reid Christopher, 2223 VG Katwijk aan Zee (NL)
(74) Representative: Berggren Oy, Helsinki & Oulu

(56) References cited:
- WO-A1-2014/174150
- WO-A2-2014/191633
- WO-A2-2015/127496
- ANGJELLARI MARIGLEN ET AL: "Beyond the concepts of nanocomposite and 3D printing: PVA and nanodiamonds for layer-by-layer additive manufacturing", MATERIALS & DESIGN, ELSEVIER, AMSTERDAM, NL, vol. 119, 17 January 2017 (2017-01-17), pages 12-21, XP029934548, ISSN: 0264-1275, DOI: 10.1016/J.MATDES.2017.01.051

## Description

### Field of the invention

The present invention relates to use of a filament comprising thermoplastic polymer and detonation nanodiamonds in three-dimensional (3D) printing and to a 3D item produced thereof.

### Background art

Three-dimensional printing (3D printing), also known as additive manufacturing (AM), refers to processes used to create a three-dimensional object in which layers of material are formed under computer control to create an object. Objects can be of almost any shape or geometry and typically are produced using digital model data from a 3D model or another electronic data source such as an Additive Manufacturing File (AMF) file.

Stereolithography (STL) is one of the most common file types that 3D printers can read. Thus, unlike material removed from a stock in the conventional machining process, 3D printing or AM builds a three-dimensional object from computer-aided design (CAD) model or AMF file by successively adding material layer by layer.

The term "3D printing" originally referred to a process that deposits a binder material onto a powder bed with inkjet printer heads layer by layer. More recently, the term is being used in popular vernacular to encompass a wider variety of additive manufacturing techniques. United States and global technical standards use the official term additive manufacturing for this broader sense.

Traditional techniques like injection moulding can be less expensive for manufacturing polymer products in high quantities, but additive manufacturing can be faster, more flexible and less expensive when producing relatively small quantities of parts. 3D printers give designers and concept development teams the ability to produce parts and concept models using a desktop size printer.

Seemingly more complex objects can be cheaper for 3D printing production than less complex objects.

Some methods melt or soften the material to produce the layers. In fused filament fabrication, also known as fused deposition modeling (FDM), the model or part is produced by extruding small beads or streams of material which harden immediately to form layers. A filament of thermoplastic, metal wire, or other material is fed into an extrusion nozzle head (3D printer extruder), which heats the material and turns the flow on and off.

One type of 3D printing filament is thermoplastic feedstock for fused deposition modeling 3D printers. There are many types of filament available with different properties, requiring different temperatures to print. Filament is usually available in two standard diameters; 1.75 and 2.85 mm.

3D printing filament is created by using a process of heating, extruding and cooling plastic to transform pellets into the finished product. Unlike a 3D printer the filament is pulled rather than pushed through the nozzle to create the filament, the diameter of the filament is defined by the process that takes place after the plastic has been heated rather than the diameter of the extruder nozzle. A different force and speed is applied to the filament as it is pulled out of the extruder to define the width of the filament. Examples of thermoplastics used as filament material are currently limited to low melting point materials such as PLA (melting point of 150 to 160 °C), ABS (no true melting point; Glass Transition Temperature of 105 °C), PVA (melting point of 200 °C) and PET (250 to 260 °C).

3D printing overall is developing rapidly and is widely researched. When it comes to 3D printers, the printing resolution, describing the printing the layer thickness and X-Y resolution in dots per inch (dpi) or micrometers (µm) is now typically around 100 µm (250 DPI), although some machines can print layers as thin as 16 µm (1,600 DPI). X-Y resolution is comparable to that of laser printers. The particles (3D dots) are around 50 to 100 µm (510 to 250 DPI) in diameter.

Nanodiamonds can be produced by synthetic or detonation processes.

Synthetic nanodiamonds may be produced by several known methods, such as chemical vapour deposition or high pressure high temperature (HPHT) method, followed by crushing and sieving of resulting diamond particles. Such particles have wide particle size distribution (PSD) and the particle size (D50) varies from tens of nanometers to several hundred micron size. Nanodiamonds produced this way don't exhibit surface functionalization, nor can their surface be functionalized with covalently bound surface functions. Moreover, their shape is irregular and the particles exhibit hard edges.

Nanodiamonds produced by detonation synthesis are called detonation nanodiamonds. That is, detonation nanodiamonds originate from detonation process.

Detonation nanodiamond, also referred to as ultrananocrystalline diamond or ultradispersed diamond (UDD), is a unique nanomaterial, which can be produced in thousands of kilograms by detonation synthesis.

Detonation nanodiamonds, or nanodiamonds originating from detonation process, were first synthesized by researchers from the USSR in 1963 by explosive decomposition of high-explosive mixtures with negative oxygen balance in a non-oxidizing medium. A typical explosive mixture is a mixture of trinitrotoluene (TNT) and hexogen (RDX), a preferred weight ratio of TNT/RDX is 40/60.

As a result of the detonation synthesis, diamond-bearing soot also referred to as detonation blend is obtained. This blend comprises spherical nanodiamond particles, which typically have an average particle size of about 2 to 8 nm, and different kinds of non-diamond carbon contaminated by metals and metal oxide particles coming from the material of the detonation chamber and used explosives. The content of nanodiamonds in the detonation blend is typically between 30 and 75% by weight.

The nanodiamond-containing blends obtained from the detonation contain same hard agglomerates, typically having a diameter of above 1 mm. Such agglomerates are difficult to break. Additionally the particle size distribution of the blend is very broad, ranging typically from several to tens of microns.

The diamond carbon comprises sp³ carbon and the non-diamond carbon mainly comprises sp² carbon species, for example carbon onion, carbon fullerene shell, amorphous carbon, graphitic carbon or any combination thereof. In addition, the nanodiamond blend contains metallic impurities originating mainly from the detonation chamber but sometimes also from the applied explosives.

There are number of processes for the purification of the detonation blends. The purification stage is considered to be the most complicated and expensive stage in the production of nanodiamonds.

For isolating the end diamond-bearing product, use is made of a complex of chemical operations directed at either dissolving or gasifying the impurities present in the material. The impurities, as a rule, are of two kinds: non-carbon (metal ions, metal oxides, salts etc.) and non-diamond forms of carbon (graphite, black, amorphous carbon).

Chemical purification techniques are based on the different stability of the diamond and non-diamond forms of carbon to oxidants. Liquid-phase oxidants offer an advantage over gas or solid systems, because they allow one to obtain higher reactant concentrations in the reaction zone and, therefore, provide high reaction rates.

The usability of the detonation nanodiamonds is based on the fact that the outer surface of detonation nanodiamond, as opposite to for example nanodiamonds derived from micron diamonds by crushing and sieving, is covered with various surface functions. Typically detonation nanodiamond surface contains mixture of oppositely charged functions and exhibits thus high agglomeration strength at low overall zeta-potential properties. With agglomeration it is meant the single nanodiamond particles tendency to form clusters of nanodiamond particles, these clusters sizing from tens of nanometers into millimetre-sized agglomerates.

The zeta potential value can be related to the stability of colloidal dispersions. The zeta potential indicates the degree of repulsion between adjacent, similarly charged particles in dispersion or suspension. For molecules and particles that are small enough, a high zeta potential will confer stability, i.e., the solution or dispersion will resist aggregation. When the potential is low, attraction exceeds repulsion and the dispersion will break and flocculate. So, colloids with high zeta potential (negative or positive) are electrically stabilized while colloids with low zeta potentials tend to coagulate or flocculate. If the zeta potential is 0 to ±5 mV, the colloid is subjected to rapid coagulation or flocculation. Zeta potential values ranging from ±10 mV to ±30 mV indicate incipient instability of the colloid (dispersion), values ranging from ±30 mV to ±40 mV indicate moderate stability, values ranging from ±40 mV to ±60 mV good stability as excellent stability is reached only with zeta potentials more than ±60 mV. One of the common ways to measure the material zeta potential is laser Doppler Micro-Electrophoresis method. An electric field is applied to a solution of molecules or a dispersion of particles, which then move with a velocity related to their zeta potential. This velocity is measured using laser interferometric technique called M3-PALS (Phase analysis Light Scattering). This enables the calculation of electrophoretic mobility, and from this the zeta potential and zeta potential distribution.

Several methods for functionalizing detonation nanodiamonds with different functional groups have been developed. Typical functionalized nanodiamonds are hydrogenated nanodiamonds, carboxylated nanodiamonds, hydroxylated nanodiamonds and amino-functionalized nanodiamonds, For example, WO2014/174150 A1 discloses a method for producing carboxylated zeta negative nanodiamond dispersion, WO2014/191633 discloses zeta positive hydrogenated nanodiamond powder, zeta positive single digit hydrogenated nanodiamond dispersions and methods for producing the same, and WO2015/092142 discloses zeta positive amino-functionalized nanodiamond powder, zeta positive amino-functionalized nanodiamond dispersion and methods for producing the same.

In the recent years detonation nanodiamonds have received more and more attention due to several existing applications within electroplating, polishing, various polymer mechanical and thermal composites, CVD-seeding, oils and lubricant additives as well as possible new applications such as luminescence imaging, drug delivery, quantum engineering etc. Their usability is based on the fact that the outer surface of detonation nanodiamond, as opposite to for example nanodiamonds derived from micron diamonds by crushing and sieving, is covered with various surface functions.

For example, EP 2900747 B2 discloses a composite comprising thermoplastic polymer, nanodiamonds and filler having improved thermal conductivity. The composite is produced by compounding and molding, such as injection molding, thermoplastic polymer, nanodiamonds and filler.

US 9702045 discloses an electroless metal plating method and a metallic coating with comprising metal and detonation nanodiamonds. The metallic coating exhibits improved wear and friction properties.

Use of nanodiamonds, such as in compositions comprising thermoplastic polymer and nanodiamonds, in 3D printing has not yet been widely researched and developed.

CN 105788891 A1 discloses a high-wearing-resistance, high-heat-conductivity electrical contact based on 3D printing technology. The raw material of the electrical contact is obtained through mixing Ag powder and nanometer diamond alkene powder.

WO 2015120429 relates to a filamentary structure extruded from a nozzle during 3D printing comprises a continuous filament including filler particles dispersed therein. Document discloses additionally 3D printable composite ink formulation comprising: an uncured polymer resin, filler particles, such as diamond particles, and a latent curing agent.

EP 2915663 discloses 3D printing using a pre-ceramic polymer with a nanoparticle filler for producing an object. The method includes depositing alternating layers of a ceramic powder and a pre-ceramic polymer dissolved in a solvent. As one alternative, the ceramic powder may be nanodiamond powder.

Publication "Nanodiamond additives for 3D printing"; Conference paper 22-23 February 2016; Abstract; discloses possibility of use nanodiamonds as reinforcing filler in thermoplastics for 3D-printing. Filaments from Acrylonitrile Butadiene Styrene (ABS) and from ABS modified with nanodiamonds (ABS-ND) were produced. ABS modification with 0.05 wt.% nanodiamonds resulted in decrease in extrusion friction enabling to enhance the productivity of filament manufacturing, rotation force reduced. Use of nanodiamond additive enhanced tensile strength and load of break of ABS while stiffness and elastic modulus increased.

Document "PVA and nanodiamonds for layer-by-layer additive manufacturing"; Materials & Design, vol. 119, 5 April 2017, p. 12-21; Abstract: discloses use of dispersions of PVA and nanodiamonds as inks for 3D printing of variously shaped objects using a layer-by-layer additive manufacturing method. Analysis of mechanical properties of the 3D printed objects showed, for 0.5%_{w/w}, 1%_{w} and 5%_{w} DND-loaded nanocomposites, values of mean indentation modulus that were higher, respectively, than that of the unloaded PVA.

However, the improvements in mechanical properties with nanodiamond containing filaments are only moderate compared to filaments without nanodiamonds.

The current thermoplastic 3D printing materials and thus, the printed objects are limited to materials with either low melting point. The polymers become softer and softer the higher above their glass transition temperature (Tg) they are applied. This in return is limiting the choice of domestic and industrial applications of 3D printed components into applications where the component thermal properties and thus, their thermal operational windows are not a concern. The applied thermoplastic materials exhibit high shrinking ratio, accumulated shrinking resulting in delamination of layers during printing. Said warping can to certain extent be avoided by applying active heating elements in the 3D printer but nevertheless limiting the printing of more complex objects and the printed object mechanical strength in general.

Based on above there is still need for developing new 3D filament materials having improved properties, and therefore items produced by 3D printing having improved properties such as strength and thermal conductivity and higher glass transition temperature.

### Summary of invention

An object of the present invention is to provide use of a filament comprising thermoplastic material and detonation nanodiamonds in 3D printing.

Another object of the present invention is to provide a filament comprising thermoplastic material and detonation nanodiamonds for use in 3D printing.

Yet, another object of the present invention is to provide a filament having increased tensile strength for 3D printing.

Yet, another object of the present invention is to provide a filament having increased thermal conductivity for 3D printing.

Yet, another object of the present invention is to provide a filament having increased glass transition temperature for 3D printing.

Further, an object of the present invention is to provide a 3D printed item comprising thermoplastic polymer and detonation nanodiamonds.

An object of the present invention is also to provide a 3D printed item having increased tensile strength and/or thermal conductivity.

It has been found that a composition of thermoplastic polymer and detonation nanodiamonds can be used as a filament in 3D printing. The filament has increased tensile strength compared to filaments not containing detonation nanodiamonds. Even a small amount of detonation nanodiamonds increases tensile strength significantly. Additionally thermal conductivity is improved and higher glass transition temperature of the filament is obtained.

It has now surprisingly been found that items produced with 3D printing by using the filament comprising thermoplastic polymer and detonation nanodiamonds have significantly increased tensile strength and thermal conductivity compared to 3D printed items not containing detonation nanodiamonds. Thus, the present invention enables manufacturing and use of more complex structures than would be available without said nanodiamond additives.

Such structures may thus enable manufacturing components not possible to manufacture with conventional injection molding or components that have to currently be manufactured from metals or metal composites. Today, such structures may also have to be produced from several components but with the present invention can now be 3D printed as one sole component, resulting in significant savings in manufacturing cost but allowing also Design Freedom, i.e. manufacturing of components with dimensions and or size not possible to manufacture with the current technologies. Warping phenomenon of 3D printed items is also avoided with the present invention.

The present invention provides a filament comprising thermoplastic polymer and detonation nanodiamonds for use in 3D printing as depicted by claim 1.

The present invention provides use of a filament comprising thermoplastic polymer and detonation nanodiamonds as depicted by claim 6.

The present invention provides a 3D printed item comprising thermoplastic polymer and detonation nanodiamonds as depicted by claim 7.

The present invention provides a method for making 3D printed product as depicted by claim 12.

### Detailed description

According to the present invention there is provided a filament for use in 3D printing comprising thermoplastic polymer and detonation nanodiamonds. More particularly there is provided a filament for use in 3D printing, the filament comprising thermoplastic polymer in an amount ranging 80 wt% to 99.99 wt% and detonation nanodiamonds in an amount ranging 0.005 wt% to 10 wt%, wherein the filament has at least 15% higher tensile strength compared to said filament without detonation nanodiamonds, and wherein the detonation nanodiamonds exhibit zeta potential higher than + 30 mV or more negative than - 30 mV.

In one embodiment the amount of the thermoplastic polymer is from 80 wt% to 99.995 wt%, preferably from 90 wt% to 99.995 wt%.

In another embodiment the amount of the thermoplastic polymer is from 80 wt% to 99.5 wt%, preferably from 80 wt% to 99.

Yet, in another embodiment the amount of the thermoplastic polymer is from 80 wt% to 97 wt%, preferably from 80 wt% to 98.

The amount of the detonation nanodiamonds is in one embodiment from 0.005 wt% to 0.05 wt%, preferably from 0.005 wt% to 0.04 wt%.

In other embodiment the amount of the detonation nanodiamonds is from 0.005 wt% to 10 wt%, preferably from 0.01 wt% to 1 wt%, more preferably from 0.01 to 0.5 wt.% and most preferably from 0.01 to 0.2 wt.%.

Yet, in other embodiment the amount of the detonation nanodiamonds is from 0.005 wt% to 5 wt%, preferably from 0.01 wt% to 5 wt%, more preferably from 0.01 to 3 wt.%.

In one embodiment the filament has at least 18% higher tensile strength compared to said filament without detonation nanodiamonds, preferably at least 20%, more preferably at least 25%, even more preferably at least 30% and most preferably at least 35% higher tensile strength. Tensile strength measurement can be carried out with a tensile strength testing apparatus, by applying ISO 527 standard. One such apparatus is Zwck Roell 250 KN tensile strength testing apparatus.

Thermal conductivity of the filament is in one embodiment at least 5% higher, preferably at least 8% higher thermal compared to said filament without detonation nanodiamonds.

The filament has, in one embodiment, at least 2 °C higher, preferably at least 5 °C higher glass transition temperature (Tg) compared to said filament without detonation nanodiamonds.

Any suitable thermoplastic polymer can be used. In one embodiment the thermoplastic polymer comprises Acrylonitrile butadiene styrene (ABS), Acrylic, Celluloid, Cellulose acetate, Cyclic Olefin Copolymer, Ethylene-Vinyl Acetate, Ethylene vinyl alcohol, Fluoroplastics such as polytetrafluoro ethylene, Ionomers, Liquid Crystal Polymer, Polyoxymethylene, Polyacrylates, Polyacrylonitrile, Polyamide, Polyamide-imide, Polyimide, Polyaryletherketone, Polybutadiene, Polybutylene, Polybutylene terephthalate , Polycaprolactone, Polychlorotrifluoroethylene, Polyether ether ketone, Polyethylene terephthalate (PET), Polycyclohexylene, Polycarbonate (PC), Polyhydroxyalkanoates, Poly- ketone, Polyester, Polyethylene (PE), Polyetherketoneketone, Polyetherimide, Polyethersulfone, Polysulfone, Chlorinated Polyethylene, Polylactic acid (PLA), Polymethylmethacrylate, Polymethylpentene, Polyphenylene, Polyphenylene oxide, Polyphenylene sulfide, Polyphthalamide, Polypropylene (PP), Polystyrene, Polysulfone, Polytrimethylene terephthalate, Polyurethane, Polyvinyl acetate, Polyvinyl chloride (PVC), Polyvinylidene chloride, and Styrene-acrylonitrile, Nylon or the combinations thereof.

Preferably the thermoplastic polymer is Acrylonitrile butadiene styrene (ABS), Polylactic acid (PLA), Nylon Polypropylene (PP), Polyethylene (PE), Polyethylene terephthalate (PET) and Polycarbonate (PC), most preferably Polylactic acid.

The Polylactic acid) PLA occurs as racemates D-racemate (PDLLA) and L-racemate (PLLA).

In one embodiment the PLA is a mixture of D- and L-racemates. In other embodiment the PLA is D-racemate or L-racemate, preferably L-racemate.

Also any suitable thermoplastic elastomers can be used instead or in combination with the thermoplastic polymer. Thermoplastic elastomers (TPE), sometimes referred to as thermoplastic rubbers, are a class of copolymers or a physical mix of polymers (usually a plastic and a rubber), which consist of materials with both thermoplastic and elastomeric properties. In one embodiment is thermoplastic elastomer is a styrenic blockcopolymer (TPS), in another embodiment the thermoplastic elastomer is a thermoplastic polyolefin elastomer (TPO), in yet another embodiment the thermoplastic elastomer is a thermoplastic vulcanizate (TPV), a thermoplastic polyurethane (TPU), a thermoplastic copolyester (TPC), a thermoplastic polyamide (TPA), a non-classified thermoplastic elastomer (TPZ) or a mixture of any known thermoplastic elastomers.

The detonation nanodiamond can be any suitable nanodiamond known in the art, as long as it exhibits a zeta potential higher than + 30 mV, or more negative than - 30 mV.

In one embodiment the detonation nanodiamond is mono-functionalized nanodiamond. The detonation nanodiamonds may be mono-functionalized with either amine, carboxylic acid, hydrogen or hydroxyl groups.

Preferably the detonation nanodiamonds are substantially mono-functionalized with either amine, carboxylic acid, hydrogen or hydroxyl groups, preferably are mono-functionalized with either amine, carboxylic acid, hydrogen or hydroxyl groups.

In one embodiment the detonation nanodiamonds are substantially amine functionalized. In another embodiment the detonation nanodiamonds are substantially carboxylic acid functionalized. In other embodiment the detonation nanodiamonds are substantially hydrogen functionalized. Yet, in other embodiment the detonation nanodiamonds are substantially hydroxyl functionalized. In another embodiment the detonation nanodiamonds are functionalized substantially with any other anionic, cationic or neutral functional groups.

The detonation nanodiamonds are commercially available or can be produced with known methods.

In one embodiment the detonation nanodiamonds exhibit zeta potential higher than + 30 mV, preferably higher than + 40 mV and more preferably higher than + 50 mV. The zeta potential is measured from 0.5 wt% aqueous nanodiamond dispersion at pH 7.

In another embodiment the detonation nanodiamonds exhibit zeta potential value more negative than - 30 mV, preferably more negative than - 40 mV and more preferably more negative than - 50 mV. The zeta potential is measured from 0.5 wt% aqueous nanodiamond dispersion at pH 7.

In one embodiment D90 particle size distribution (as measured from 0.5 wt.% nano-diamond dispersion) is less than 15 nm, preferably from 2 nm to 15 nm, more preferably, from 2 nm to 10 nm.

In a preferred embodiment the filament has diameter of 1.75mm ± 0.05mm or 2.85mm ±0.10mm.

The filament may additionally comprise at least one filler other than detonation nanodiamond selected from a group consisting of metal, metal oxide, metal nitride, metal carbide, carbon compound, silicon compound, boron compound such as boron nitride, ceramic materials, natural fibers or the combinations thereof. The carbon compound can be selected from diamond material other than detonation diamond, graphite, carbon black, carbon fiber, graphene, oxidized graphene, carbon soot, carbon nanotube, pyrolytic carbon, silicon carbide, aluminum car- bide, carbon nitride, or the combinations thereof.

The filament can be transparent or substantially transparent. The filament may also comprise a coloring agent, to make the filament available in desired color. The filament may be produced by any known suitable method, such as by providing thermoplastic polymer; providing detonation nanodiamonds; compounding the thermoplastic polymer and the detonation nanodiamonds to form a compound; and extruding the compound to form filaments.

In an exemplary embodiment the filament is produced with a method comprising agitating detonation nanodiamonds and thermoplastic polymer in a liquid medium such as water, to form a solution; removing, the liquid medium from the solution, such as by evaporating and/or drying, to form thermoplastic polymer pellets coated with detonation nanodiamonds; compounding the coated pellets and extruding to form the filament.

According to the present invention there is also provided use of the filament in 3D printing, the filament comprising the thermoplastic polymer in an amount ranging 80 wt% to 99.99 wt% and the detonation nanodiamonds as described above in an amount ranging 0.005 wt% to 10 wt% in 3D, wherein the filament has at least 15% higher tensile strength compared to said filament without the detonation nanodiamonds.

The thermoplastic polymer and the detonation nanodiamonds have the features defined above. The amounts of the thermoplastic polymer and the detonation nanodiamonds are as defined above. The filament has the same features as defined above.

According to the present invention there is also provided a 3D printed item comprising thermoplastic polymer in amount ranging from 80 wt% to 99.99 wt% and detonation nanodiamonds as described above in an amount ranging 0.005 wt% to 10 wt%, wherein the item has at least 15% higher tensile strength compared to said item without detonation nanodiamonds.

In one embodiment the amount of the thermoplastic polymer is from 80 wt% to 99.995 wt%, preferably from 90 wt% to 99.995 wt%.

In another embodiment the amount of the thermoplastic polymer is from 80 wt% to 99.5 wt%, preferably from 90 wt% to 99.

Yet, in another embodiment the amount of the thermoplastic polymer is from 80 wt% to 97 wt%, preferably from 80 wt% to 98.

The amount of the detonation nanodiamonds is in one embodiment from 0.005 wt% to 0.05 wt%, preferably from 0.005 wt% to 0.04 wt%.

In other embodiment the amount of the detonation nanodiamonds is from 0.005 wt% to 10 wt%, preferably from 0.01 wt% to 1 wt%, more preferably from 0.01 to 0.5 wt.% and most preferably from 0.01 to 0.2 wt.%.

Yet, in other embodiment the amount of the detonation nanodiamonds is from 0.005 wt% to 5 wt%, preferably from 0.01 wt% to 5 wt%, more preferably from 0.01 to 3 wt.%.

In one embodiment the item has at least 18% higher tensile strength compared to said item without detonation nanodiamonds, preferably at least 20%, more preferably at least 25%, even more preferably at least 30% and most preferably at least 35 % higher tensile strength. Tensile strength measurement can be carried out with a tensile strength testing apparatus, by applying ISO 527 standard. One such apparatus is Zwck Roell 250 KN tensile strength testing apparatus.

Thermal conductivity of the item is in one embodiment at least 5% higher, preferably at least 8% higher thermal compared to said item without detonation nanodiamonds.

The item has, in one embodiment, at least 2 °C higher, preferably at least 5 °C higher glass transition temperature (Tg) compared to said item without detonation nanodiamonds.

Any suitable thermoplastic polymer can be used. In one embodiment the thermoplastic polymer comprises Acrylonitrile butadiene styrene (ABS), Acrylic, Celluloid, Cellulose acetate, Cyclic Olefin Copolymer, Ethylene-Vinyl Acetate, Ethylene vinyl alcohol, Fluoroplastics such as polytetrafluoro ethylene, Ionomers, Liquid Crystal Polymer, Polyoxymethylene, Polyacrylates, Polyacrylonitrile, Polyamide, Polyamide-imide, Polyimide, Polyaryletherketone, Polybutadiene, Polybutylene, Polybutylene terephthalate , Polycaprolactone, Polychlorotrifluoroethylene, Polyether ether ketone, Polyethylene terephthalate (PET), Polycyclohexylene, Polycarbonate (PC), Polyhydroxyalkanoates, Poly- ketone, Polyester, Polyethylene (PE), Polyetherketoneketone, Polyetherimide, Polyethersulfone, Polysulfone, Chlorinated Polyethylene, Polylactic acid (PLA), Polymethylmethacrylate, Polymethylpentene, Polyphenylene, Polyphenylene oxide, Polyphenylene sulfide, Polyphthalamide, Polypropylene (PP), Polystyrene, Polysulfone, Polytrimethylene terephthalate, Polyurethane, Polyvinyl acetate, Polyvinyl chloride (PVC), Polyvinylidene chloride, and Styrene-acrylonitrile, Nylon or the combinations thereof.

Preferably the thermoplastic polymer is Acrylonitrile butadiene styrene (ABS), Polylactic acid (PLA), Nylon, Polypropylene (PP), Polyethylene (PE), Polyethylene terephthalate (PET) and Polycarbonate (PC), most preferably Polylactic acid.

The polylactic acid) PLA occurs as racemates D-racemate (PDLLA) and L-racemate (PLLA).

In one embodiment the PLA is a mixture D- and L-racemates; D-racemate; or L-racemate, preferably L-racemate.

Also any suitable thermoplastic elastomers can be used instead or in combination with the thermoplastic polymer. Thermoplastic elastomers (TPE), sometimes referred to as thermoplastic rubbers, are a class of copolymers or a physical mix of polymers (usually a plastic and a rubber), which consist of materials with both thermoplastic and elastomeric properties. In one embodiment is thermoplastic elastomer is a styrenic blockcopolymer (TPS), in another embodiment the thermoplastic elastomer is a thermoplastic polyolefin elastomer (TPO), in yet another embodiment the thermoplastic elastomer is a thermoplastic vulcanizate (TPV), a thermoplastic polyurethane (TPU), a thermoplastic copolyester (TPC), a thermoplastic polyamide (TPA), a non-classified thermoplastic elastomer (TPZ) or a mixture of any known thermoplastic elastomers.

The detonation nanodiamond can be any suitable nanodiamond known in the art, as long as it exhibits a zeta potential higher than + 30 mV, or more negative than - 30 mV.

In one embodiment the detonation nanodiamond is mono-functionalized nanodiamond. The detonation nanodiamonds may be mono-functionalized with either amine, carboxylic acid, hydrogen or hydroxyl groups.

Preferably the detonation nanodiamonds are substantially mono-functionalized with either amine, carboxylic acid, hydrogen or hydroxyl groups, preferably are mono-functionalized with either amine, carboxylic acid, hydrogen or hydroxyl groups.

In one embodiment the detonation nanodiamonds are substantially amine functionalized. In another embodiment the detonation nanodiamonds are substantially carboxylic acid functionalized. In other embodiment the detonation nanodiamonds are substantially hydrogen functionalized. Yet, in other embodiment the detonation nanodiamonds are substantially hydroxyl functionalized. In another embodiment the detonation nanodiamonds are functionalized substantially with any other anionic, cationic or neutral functional groups.

Such detonation nanodiamonds are commercially available or can be produced with known methods.

In one embodiment the detonation nanodiamonds exhibit zeta potential higher than + 30 mV, preferably higher than + 40 mV and more preferably higher than + 50 mV. The zeta potential is measured from 0.5 wt% aqueous nanodiamond dispersion at pH 7.

In another embodiment the detonation nanodiamonds exhibit zeta potential value more negative than - 30 mV, preferably more negative than - 40 mV and more preferably more negative than - 50 mV. The zeta potential is measured from 0.5 wt% aqueous nanodiamond dispersion at pH 7.

In one embodiment D90 particle size distribution (as measured from 0.5 wt.% nano-diamond dispersion) is less than 15 nm, preferably from 2 nm to 15 nm, more preferably, from 2 nm to 10 nm.

The item may additionally comprise at least one filler other than detonation nanodiamond selected from a group consisting of metal, metal oxide, metal nitride, metal carbide, carbon compound, silicon compound, boron compound such as boron nitride, ceramic materials, natural fibers or the combinations thereof. The carbon compound can be selected from diamond material other than detonation diamond, graphite, carbon black, carbon fiber, graphene, oxidized graphene, carbon soot, carbon nanotube, pyrolytic carbon, silicon carbide, aluminum car- bide, carbon nitride, or the combinations thereof.

The item can be transparent or substantially transparent. The item may also comprise a coloring agent, to make the item available in desired color.

The use of nanodiamond fillers will enable better layer to layer adhesion by improving the 3D printed item tensile strength but also thermal properties such as thermal conductivity and glass transition temperature. The use of nanodiamond fillers will also improve 3D printed item compression strength properties. Improved thermal properties will widen the applicable operational temperature window of 3D printed items, i.e. to prevent 3D printed item softening at a temperature wherein the 3D printed item would already soften if printed from nanodiamond not containing 3D printing filaments. Nanodiamond enhanced thermoplastic material properties will also allow the use of thermoplastic materials not applicable within 3D printing today but if facilitated, would be beneficial for a range of industrial products and applications.

The present invention further provides a method for making 3D printed item, the method comprising:
- melting a filament comprising thermoplastic material in an amount ranging 80 wt% to 99.99 wt% and detonation nanodiamonds as described above in an amount ranging 0.005 wt% to 10 wt% in printing head of a 3D printer; and
- depositing the molten material in a 3D printer in successive layers to form a 3D printed item.

The present invention further provides a use of 3D printed item comprising thermoplastic polymer in amount ranging from 80 wt% to 99.99 wt% and detonation nanodiamonds as described above in an amount ranging 0.005 wt% to 10 wt%, wherein the item has at least 15% higher tensile strength compared to said item without detonation nanodiamonds. The use of 3D printed item according to the present invention may be but is not limited to within automotive including E-mobility, aerospace, electronic devices, bicycles, household goods, industrial components, military components, polymeric components to replace current metallic components, molds, medical devices and artificial bone replacement materials, water purification devices and structures, decorative items, components and structures applied in chemicals manufacturing and agricultural devices. The present invention further provides manufacturing and use of more complex structures than would be available without said nanodiamond additives. Such structures may thus enable manufacturing components not possible to manufacture with conventional injection molding or components that have to currently be manufactured from metals or metal composites. Today, such structures may also have to be produced from several components but can now be 3D printed as one sole component, resulting in significant savings in manufacturing cost but allowing also Design Freedom, i.e. manufacturing of components with dimensions and or size not possible to manufacture with the current technologies.

Hereafter, the present invention is described in more detail and specifically with reference to the examples, which are not intended to limit the present invention.

### Examples

### Materials

The applied nanodiamond material was Carbodeon Ltd Oy produced uDiamond Amine D dispersion in water (0.5 wt.% nanodiamond content). Said material zeta potential exceeds + 50 mV and applied product lot particle size distribution (as measured from 0.5 wt.% nano-diamond dispersion) was less than 15 nm (D90). The degree applied nano- diamond material amine surface termination was determined by measuring the nanodiamond material contained surface nitrogen with Kjeldahl method and exceeded the specified value of 2000 mg/kg of nanodiamonds. Particle size and zeta potential measurements were carried out with Malvern Zetasizer Nano ZS tool.

The applied thermoplastic material was Bioplast 2202 PLLA grade, supplied by Corbion Plastic, as standard 3 mm granules.

### Analyses

The tensile strength measurements were carried out with Zwck Roell 250 KN tensile strength testing apparatus, by TU Delft Aerospace Department. The measurements were carried out at 19.5 °C temperature, by applying ISO 527 standard.

### Processing to manufacture the reference Bioplast 2202 PLLA sample filaments and 0.05 wt.% amine-terminated nanodiamond filled Bioplast 2202 PLLA sample filaments

### Bioplast 2202 PLLA pellets pre-drying

3 kg's of 3 mm Bioplast 2202 PLLA pellets were dried in a 5 liter precision scientific vacuum oven, at 21-25 Inch of mercury (inHg) vacuum and at 62-67 °C temperature, in four hour intervals over 24 hours period, processing one kg of thermoplastic material at a time.

### 0.05 wt.% amine-terminated nanodiamond - Bioplast 2202 PLLA pellets mixing and drying

100 g of 0.5 wt.% uDiamond Amine D aqueous nanodiamond dispersion (corresponding to 0,5 g of nanodiamond particles) was diluted with 900 grams of deionized water, followed by mixing resulting diluted nanodiamond dispersion with 999,5 grams of pre-dried 3 mm Bioplast 2202 PLLA pellets. In order to reach even distribution of nanodiamond particles onto PLLA pellets surfaces, the resulting mixture was agitated gently with a mechanical mixer and left to stabilize over a 24 hours period. The resulting nanodiamond dispersion PLLA pellet mixture was then placed in a 5 liter precision scientific vacuum oven, at 21-25 Inch of mercury (inHg) vacuum and at 62-67 °C temperature, in four hour intervals over 24 hours period, to result in dried Bioplast 2202 PLLA pellets with 0.05 wt.% of amine-terminated nanodiamonds coated evenly on PLLA pellets surfaces.

### Compounding and filament manufacturing

### Bioplast 2202 PLLA reference filament sample

One kg of pre-dried, 3 mm Bioplast 2202 PLLA pellets were compounded with a Noztek high temperature XT one heat zone single screw extruder, applying a 1.75 mm nozzle made out of brass, with an additional in-line heat band to achieve a 10 cm flow section. The applied compounding temperature was set to 220 °C, in an environment of 10 °C.

The produced filament was cooled by air and no filament winder was applied but was collected to a table next to extruder. Under these conditions, the extruder throughput is 1 kg/h. The produced, ready to use Bioplast 2202 PLLA filament material comprised a size of 1.75 with ± 0.2 mm size deviation.

### 0.05 wt.% amine-terminated nanodiamond filled Bioplast 2202 PLLA filament sample

500 g of dried, 3 mm 0.05 wt.% amine-terminated nanodiamond coated Bioplast 2202 PLLA pellets were compounded with a Noztek high temperature XT one heat zone single screw extruder, applying a 1.75 mm nozzle made out of brass, with an additional in-line heat band to achieve a 10 cm flow section. The applied compounding temperature was set to 220 °C, in an environment of 10 °C.

The produced filament was cooled by air and no filament winder was applied but was collected to a table next to extruder. Under these conditions, the extruder throughput is 1 kg/h. The produced, ready to use 0.05 wt.% amine-terminated nanodiamond Bioplast 2202 PLLA filament material comprised a size of 1.75 with ± 0.2 mm size deviation.

### 3D printing of sample specimen

The sample specimens were prepared with an Ultimaker 2+ 3D printer. The applied design file was scale an adjusted 1B tensle 'dogbone' downloaded from an open source community Thngiverse.com. The conversion of said file was done with Cura program available from Ultimaker. The design file for all samples was held constant. The code file used to print the piece was held constant across all samples, consisting of 2 perimeter walls and a 45 by 45 degree diagonal infill pattern.

### Results

The tensile strength was measured from two Bioplast 2202 PLLA 3D-printed reference samples and from two 0.05 wt.% amine-terminated nanodiamond-Bioplast 2202 PLLA 3 D printed samples, as depicted in Table 1.

**Table 1. Tensile strength measurements.**

| Specimen ID | L₀ | Fₘₐₓ | a₀ | b₀ | S₀ | Tensile Strength | |
|---|---|---|---|---|---|---|---|
| | mm | N | mm | mm | mm² | Tensile Strength | |
| Reference 1 | 30,09 | 345,6556396 | 1,3 | 9,44 | 12,272 | 28,16620271 | Mpa |
| Reference 2 | 30,115 | 345,7418518 | 1,52 | 9,4 | 14,288 | 24,19805794 | Mpa |
| 0.05 wt. % ND | 30,125 | 826,7680054 | 2,4 | 9,47 | 22,728 | 36,37662818 | Mpa |
| 0.05 wt. % ND | 30,185 | 626,3701782 | 1,89 | 9,23 | 17,4447 | 35,90604471 | Mpa |

The two PLLA reference samples average tensile strength is 26.182. The two nanodiamond enhanced average tensile strength is 36.142. Hence, the 0.05 wt.% amine-terminated nanodiamond containing 3D printed PLLA material tensile strength was improved by 38%.

## Claims

1. A filament for use in 3D printing comprising thermoplastic polymer in an amount ranging 80 wt% to 99.99 wt% and detonation nanodiamonds in an amount ranging 0.005 wt% to 10 wt%, wherein the filament has at least 15% higher tensile strength measured according to ISO 527 compared to said filament without detonation nanodiamonds wherein the detonation nanodiamonds exhibit zeta potential higher than + 30 mV, preferably higher than + 40 mV and more preferably higher than + 50 mV or the detonation nanodiamonds exhibit zeta potential value more negative than - 30 mV, preferably more negative than - 40 mV and more preferably more negative than - 50 mV, wherein the zeta potential is measured as indicated in the description.

2. A filament for use in 3D printing according to claim 1, wherein said thermoplastic polymer comprises Acrylonitrile butadiene styrene, Acrylic, Celluloid, Cellulose acetate, Cyclic Olefin Copolymer, Ethylene-Vinyl Acetate, Ethylene vinyl alcohol, Fluoroplastics such as polytetrafluoro ethylene, lonomers, Liquid Crystal Polymer, Polyoxymethylene, Polyacrylates, Polyacrylonitrile, Polyamide, Polyamide-imide, Polyimide, Polyaryletherketone, Polybutadiene, Polybutylene, Polybutylene terephthalate, Polycaprolactone, Polychlorotrifluoroethylene, Polyether ether ketone, Polyethylene terephthalate, Polycyclohexylene, , Polycarbonate, Polyhydroxyalkanoates, Poly- ketone, Polyester, Polyethylene, Polyetherketoneketone, Polyetherimide, Polyethersulfone, Polysulfone, Chlorinated Polyethylene, Polylactic acid, Polymethylmethacrylate, Polymethylpentene, Polyphenylene, Polyphenylene oxide, Polyphenylene sulfide, Polyphthalamide, Polypropylene, Polystyrene, Polysulfone, Polytrimethylene terephthalate, Polyurethane, Polyvinyl acetate, Polyvinyl chloride, Polyvinylidene chloride, and Styrene-acrylonitrile, any Thermoplastic elastomer or the combinations thereof; preferably the thermoplastic polymer is Acrylonitrile butadiene styrene (ABS), Polylactic acid (PLA), Nylon , Polypropylene (PP), Polyethylene (PE), Polyethylene terephthalate (PET) and Polycarbonate (PC), more preferably Polylactic acid.

3. A filament for use in 3D printing according to claim 1 or 2, wherein the detonation nanodiamonds are substantially mono-functionalized with either amine, carboxylic acid, hydrogen or hydroxyl groups.

4. A filament for use in 3D printing according to any one of claims 1-3, wherein the filament has minimum 2 °C higher glass transition temperature (Tg) compared to said filament without detonation nanodiamonds.

5. A filament for use in 3D printing according to any one of claims 1-4, wherein the filament has at least 2% higher thermal conductivity than said filament without detonation nanodiamonds.

6. Use of a filament comprising thermoplastic polymer in an amount ranging 80 wt% to 99.99 wt% and detonation nanodiamonds in an amount ranging 0.005 wt% to 10 wt% in 3D printing,
wherein the filament has at least 15% higher tensile strength measured according to ISO 527 compared to said filament without detonation nanodiamonds, wherein the detonation nanodiamonds exhibit zeta potential higher than + 30 mV, preferably higher than + 40 mV and more preferably higher than + 50 mV or the detonation nanodiamonds exhibit zeta potential value more negative than - 30 mV, preferably more negative than - 40 mV and more preferably more negative than - 50 mV, wherein the zeta potential is measured as indicated in the description.

7. A 3D printed item comprising thermoplastic polymer in amount ranging from 80 wt% to 99.99 wt% and detonation nanodiamonds in an amount ranging 0.005 wt% to 10 wt%, wherein the item has at least 15% higher tensile strength measured according to ISO 527 compared to said item without detonation nanodiamonds, wherein the detonation nanodiamonds exhibit zeta potential higher than + 30 mV, preferably higher than + 40 mV and more preferably higher than + 50 mV or the detonation nanodiamonds exhibit zeta potential value more negative than - 30 mV, preferably more negative than - 40 mV and more preferably more negative than - 50 mV, wherein the zeta potential is measured as indicated in the description.

8. A 3D printed item according to claim 7, wherein said thermoplastic polymer comprises Acrylonitrile butadiene styrene, Acrylic, Celluloid, Cellulose acetate, Cyclic Olefin Copolymer, Ethylene-Vinyl Acetate, Ethylene vinyl alcohol, Fluoroplastics such as polytetrafluoro ethylene, lonomers, Liquid Crystal Polymer, Polyoxymethylene, Polyacrylates, Polyacrylonitrile, Polyamide, Polyamide-imide, Polyimide, Polyaryletherketone, Polybutadiene, Polybutylene, Polybutylene terephthalate, Polycaprolactone, Polychlorotrifluoroethylene, Polyether ether ketone, Polyethylene terephthalate, Polycyclohexylene, Polycarbonate, Polyhydroxyalkanoates, Poly- ketone, Polyester, Polyethylene, Polyetherketoneketone, Polyetherimide, Polyethersulfone, Polysulfone, Chlorinated Polyethylene, Polylactic acid, Polymethylmethacrylate, Polymethylpentene, Polyphenylene, Polyphenylene oxide, Polyphenylene sulfide, Polyphthalamide, Polypropylene, Polystyrene, Polysulfone, Polytrimethylene terephthalate, Polyurethane, Polyvinyl acetate, Polyvinyl chloride, Polyvinylidene chloride, and Styrene-acrylonitrile, any Thermoplastic elastomer or the combinations thereof; preferably the thermoplastic polymer is Acrylonitrile butadiene styrene (ABS), Polylactic acid (PLA), Nylon, Polypropylene (PP), Polyethylene (PE), Polyethylene terephthalate (PET) and Polycarbonate (PC), more preferably Polylactic acid.

9. A 3D printed item according to claim according to any one of claims 7-8, wherein the detonation nanodiamonds are substantially mono-functionalized with either amine, carboxylic acid, hydrogen or hydroxyl groups.

10. A 3D printed item according to claim according to any one of claims 7-9, wherein the item has at least 2 °C higher glass transition temperature (Tg) compared to said item without detonation nanodiamonds.

11. A 3D printed item according to any one of claims 7-10, wherein the item has at least 2% higher thermal conductivity compared to said item without detonation nanodiamonds.

12. A method for making 3D printed product, the method comprising:
- melting a filament comprising thermoplastic material in an amount ranging 80 wt% to 99.99 wt% and detonation nanodiamonds in an amount ranging 0.005 wt% to 10 wt%, wherein the detonation nanodiamonds exhibit zeta potential higher than + 30 mV, preferably higher than + 40 mV and more preferably higher than + 50 mV or the detonation nanodiamonds exhibit zeta potential value more negative than - 30 mV, preferably more negative than - 40 mV and more preferably more negative than - 50 mV, wherein the zeta potential is measured as indicated in the description, in printing head of a 3D printer; and
- depositing the molten material in a 3D printer in successive layers to form a 3D printed product.

## Patentansprüche

1. Filament zur Verwendung im 3D-Druck, umfassend thermoplastisches Polymer in einer Menge im Bereich von 80 Gew.-% bis 99,99 Gew.-% und Detonationsnanodiamanten in einer Menge im Bereich von 0,005 Gew.-% bis 10 Gew.-%, wobei das Filament im Vergleich zu dem Filament ohne Detonationsnanodiamanten eine um mindestens 15 % höhere Zugfestigkeit, gemessen gemäß ISO 527, aufweist, wobei die Detonationsnanodiamanten ein Zetapotenzial von über +30 mV, vorzugsweise über +40 mV und besonders bevorzugt über +50 mV aufweisen oder die Detonationsnanodiamanten einen Zetapotenzialwert aufweisen, der niedriger ist als -30 mV, vorzugsweise niedriger als -40 mV und besonders bevorzugt niedriger als -50 mV ist, wobei das Zetapotenzial wie in der Beschreibung angegeben gemessen wird.

2. Filament zur Verwendung im 3D-Druck nach Anspruch 1, wobei das thermoplastische Polymer Acrylonitrilbutadienstyrol, Acryl, Zelluloid, Celluloseacetat, Cycloolefin-Copolymer, Ethylenvinylacetat, Ethylenvinylalkohol, Fluorkunststoffe wie etwa Polytetrafluorethylen, Ionomere, Flüssigkristallpolymer, Polyoxymethylen, Polyacrylate, Polyacrylonitril, Polyamid, Polyamidimid, Polyimid, Polyaryletherketon, Polybutadien, Polybutylen, Polybutylenterephthalat, Polycaprolacton, Polychlortrifluorethylen, Polyetheretherketon, Polyethylenterephthalat, Polycyclohexylen, Polycarbonat, Polyhydroxyalkanoate, Polyketon, Polyester, Polyethylen, Polyetherketonketon, Polyetherimid, Polyethersulfon, Polysulfon, chloriertes Polyethylen, Polymilchsäure, Polymethylmethacrylat, Polymethylpenten, Polyphenylen, Polyphenylenoxid, Polyphenylensulfid, Polyphthalamid, Polypropylen, Polystyrol, Polysulfon, Polytrimethylenterephthalat, Polyurethan, Polyvinylacetat, Polyvinylchlorid, Polyvinylidenchlorid und Styrolacrylonitril, ein beliebiges thermoplastisches Elastomer oder die Kombinationen davon umfasst; vorzugsweise handelt es sich bei dem thermoplastischen Polymer um Acrylonitrilbutadienstyrol (ABS), Polymilchsäure (PLA), Nylon, Polypropylen (PP), Polyethylen (PE), Polyethylenterephthalat (PET) und Polycarbonat (PC), besonders bevorzugt um Polymilchsäure.

3. Filament zur Verwendung im 3D-Druck nach Anspruch 1 oder 2, wobei die Detonationsnanodiamanten im Wesentlichen mit entweder Amin, Carbonsäure, Wasserstoff oder Hydroxylgruppen monofunktionalisiert sind.

4. Filament zur Verwendung im 3D-Druck nach einem der Ansprüche 1-3, wobei das Filament im Vergleich zu dem Filament ohne Detonationsnanodiamanten eine um mindestens 2 °C höhere Glasübergangstemperatur (Tg) aufweist.

5. Filament zur Verwendung im 3D-Druck nach einem der Ansprüche 1-4, wobei das Filament eine um mindestens 2 % höhere Wärmeleitfähigkeit als das Filament ohne Detonationsnanodiamanten aufweist.

6. Verwendung eines Filaments, das thermoplastisches Polymer in einer Menge im Bereich von 80 Gew.-% bis 99,99 Gew.-% und Detonationsnanodiamanten in einer Menge im Bereich von 0,005 Gew.-% bis 10 Gew.-% umfasst, im 3D-Druck,
wobei das Filament im Vergleich zu dem Filament ohne Detonationsnanodiamanten eine um mindestens 15 % höhere Zugfestigkeit, gemessen gemäß ISO 527, aufweist, wobei die Detonationsnanodiamanten ein Zetapotenzial von über +30 mV, vorzugsweise über +40 mV und besonders bevorzugt über +50 mV aufweisen oder die Detonationsnanodiamanten einen Zetapotenzialwert aufweisen, der niedriger als - 30 mV, vorzugsweise niedriger als -40 mV und besonders bevorzugt niedriger als -50 mV ist, wobei das Zetapotenzial wie in der Beschreibung angegeben gemessen wird.

7. 3D-bedrucktes Element, umfassend thermoplastisches Polymer in einer Menge im Bereich von 80 Gew.-% bis 99,99 Gew.-% und Detonationsnanodiamanten in einer Menge im Bereich von 0,005 Gew.-% bis 10 Gew.-%, wobei das Element im Vergleich zu dem Element ohne Detonationsnanodiamanten eine um mindestens 15 % höhere Zugfestigkeit, gemessen gemäß ISO 527, aufweist, wobei die Detonationsnanodiamanten ein Zetapotenzial von über +30 mV, vorzugsweise über + 40 mV und besonders bevorzugt über + 50 mV aufweisen oder die Detonationsnanodiamanten einen Zetapotenzialwert aufweisen, der niedriger als - 30 mV, vorzugsweise niedriger als -40 mV und besonders bevorzugt niedriger als -50 mV ist, wobei das Zetapotenzial wie in der Beschreibung angegeben gemessen wird.

8. 3D-bedrucktes Element nach Anspruch 7, wobei das thermoplastische Polymer Acrylonitrilbutadienstyrol, Acryl, Celluloid, Celluloseacetat, Cycloolefin-Copolymer, Ethylenvinylacetat, Ethylenvinylalkohol, Fluorkunststoffe wie Polytetrafluorethylen, Ionomere, Flüssigkristallpolymer, Polyoxymethylen, Polyacrylate, Polyacrylonitril, Polyamid, Polyamidimid, Polyimid, Polyaryletherketon, Polybutadien, Polybutylen, Polybutylenterephthalat, Polycaprolacton, Polychlortrifluorethylen, Polyetherketon, Polyethylenterephthalat, Polycyclohexylen, Polycarbonat, Polyhydroxyalkanoate, Polyketon, Polyester, Polyethylen, Polyetherketonketon, Polyetherimid, Polyethersulfon, Polysulfon, chloriertes Polyethylen, Polymilchsäure, Polymethylmethacrylat, Polymethylpenten, Polyphenylen, Polyphenylenoxid, Polyphenylensulfid, Polyphthalamid, Polypropylen, Polystyrol, Polysulfon, Polytrimethylenterephthalat, Polyurethan, Polyvinylacetat, Polyvinylchlorid, Polyvinylidenchlorid, und Styrolacrylonitril, ein beliebiges thermoplastisches Elastomer oder die Kombinationen davon umfasst; vorzugsweise handelt es sich bei dem thermoplastischen Polymer um Acrylonitrilbutadienstyrol (ABS), Polymilchsäure (PLA), Nylon, Polypropylen (PP), Polyethylen (PE), Polyethylenterephthalat (PET) und Polycarbonat (PC), besonders bevorzugt um Polymilchsäure.

9. 3D-bedrucktes Element nach Anspruch nach einem der Ansprüche 7-8, wobei die Detonationsnanodiamanten im Wesentlichen mit entweder Amin, Carbonsäure, Wasserstoff oder Hydroxylgruppen monofunktionalisiert sind.

10. 3D-bedrucktes Element nach einem der Ansprüche 7-9, wobei das Element im Vergleich zu dem Element ohne Detonationsnanodiamanten eine um mindestens 2 °C höhere Glasübergangstemperatur (Tg) aufweist.

11. 3D-bedrucktes Element nach einem der Ansprüche 7-10, wobei das Element im Vergleich zu dem Element ohne Detonationsnanodiamanten eine um mindestens 2 % höhere Wärmeleitfähigkeit aufweist.

12. Verfahren zum Herstellen eines 3D-bedruckten Produkts, wobei das Verfahren umfasst:
- Schmelzen eines Filaments, das thermoplastisches Material in einer Menge im Bereich von 80 Gew.-% bis 99,99 Gew.-% und Detonationsnanodiamanten in einer Menge im Bereich von 0,005 Gew.-% bis 10 Gew.-% umfasst, wobei die Detonationsnanodiamanten ein Zetapotenzial von über +30 mV, vorzugsweise über +40 mV und besonders bevorzugt über +50 mV aufweisen oder die Detonationsnanodiamanten einen Zetapotenzialwert aufweisen, der niedriger als - 30 mV, vorzugsweise niedriger als -40 mV und besonders bevorzugt niedriger als -50 mV ist, wobei das Zetapotenzial wie in der Beschreibung angegeben gemessen wird, im Druckkopf eines 3D-Druckers; und
- Abscheiden des geschmolzenen Materials in einem 3D-Drucker in aufeinanderfolgenden Schichten, um ein 3D-bedrucktes Produkt zu bilden.

## Revendications

1. Filament destiné à être utilisé en impression 3D comprenant du polymère thermoplastique en une quantité allant de 80 % en poids à 99,99 % en poids et des nanodiamants élaborés par détonation en une quantité allant de 0,005 % en poids à 10 % en poids, le filament ayant une résistance à la traction mesurée selon la norme ISO 527 au moins 15 % plus élevée par comparaison avec ledit filament sans nanodiamants élaborés par détonation, dans lequel les nanodiamants élaborés par détonation présentent un potentiel zêta supérieur à +30 mV, de préférence supérieur à +40 mV et de préférence encore supérieur à +50 mV ou les nanodiamants élaborés par détonation présentent une valeur de potentiel zêta plus négative que -30 mV, de préférence plus négative que -40 mV et de préférence encore plus négative que -50 mV, le potentiel zêta étant mesuré comme indiqué dans la description.

2. Filament destiné à être utilisé en impression 3D selon la revendication 1, dans lequel ledit polymère thermoplastique comprend de l'acrylonitrile-butadiène-styrène, de la résine acrylique, du celluloïd, de l'acétate de cellulose, un copolymère d'oléfine cyclique, de l'éthylène-acétate de vinyle, de l'éthylène-alcool vinylique, des matières plastiques fluorées telles que du polytétrafluoroéthylène, des ionomères, un polymère à cristaux liquides, du polyoxyméthylène, des polyacrylates, du polyacrylonitrile, du polyamide, du polyamide-imide, du polyimide, de la polyaryléthercétone, du polybutadiène, du polybutylène, du poly(téréphtalate de butylène), de la polycaprolactone, du polychlorotrifluoroéthylène, de la polyétheréthercétone, du poly(téréphtalate d'éthylène), du polycyclohexylène, du polycarbonate, des polyhydroxyalcanoates, de la polycétone, du polyester, du polyéthylène, de la polyéthercétonecétone, du polyétherimide, de la polyéthersulfone, de la polysulfone, du polyéthylène chloré, du poly(acide lactique), du poly(méthacrylate de méthyle), du polyméthylpentène, du polyphénylène, du poly(oxyde de phénylène), poly(sulfure de phénylène), du polyphtalamide, du polypropylène, du polystyrène, de la polysulfone, du poly(téréphtalate de triméthylène), du polyuréthane, du poly(acétate de vinyle), du poly(chlorure de vinyle), du poly(chlorure de vinylidène) et du styrène-acrylonitrile, un quelconque élastomère thermoplastique ou les associations de ceux-ci ; de préférence le polymère thermoplastique est de l'acrylonitrile-butadiène-styrène (ABS), du poly(acide lactique) (PLA), du nylon, du polypropylène (PP), du polyéthylène (PE), du poly(téréphtalate d'éthylène) (PET) et du polycarbonate (PC), de préférence encore du poly(acide lactique).

3. Filament destiné à être utilisé en impression 3D selon la revendication 1 ou 2, dans lequel les nanodiamants élaborés par détonation sont en grande partie mono-fonctionnalisés avec des groupes soit amine, soit acide carboxylique, soit hydrogène soit hydroxyle.

4. Filament destiné à être utilisé en impression 3D selon l'une quelconque des revendications 1-3, le filament ayant une température de transition vitreuse (Tg) au minimum 2 °C plus élevée par comparaison avec ledit filament sans nanodiamants élaborés par détonation.

5. Filament destiné à être utilisé en impression 3D selon l'une quelconque des revendications 1-4, le filament ayant une conductivité thermique au moins 2 % plus élevée que ledit filament sans nanodiamants élaborés par détonation.

6. Utilisation d'un filament comprenant du polymère thermoplastique en une quantité allant de 80 % en poids à 99,99 % en poids et des nanodiamants élaborés par détonation en une quantité allant de 0,005 % en poids à 10 % en poids en impression 3D, dans laquelle le filament a une résistance à la traction mesurée selon la norme ISO 527 au moins 15 % plus élevée par comparaison avec ledit filament sans nanodiamants élaborés par détonation, dans laquelle les nanodiamants élaborés par détonation présentent un potentiel zêta supérieur à +30 mV, de préférence supérieur à +40 mV et de préférence encore supérieur à +50 mV ou les nanodiamants élaborés par détonation présentent une valeur de potentiel zêta plus négative que -30 mV, de préférence plus négative que -40 mV et de préférence encore plus négative que -50 mV, le potentiel zêta étant mesuré comme indiqué dans la description.

7. Article imprimé en 3D comprenant du polymère thermoplastique en quantité allant de 80 % en poids à 99,99 % en poids et des nanodiamants élaborés par détonation en une quantité allant de 0,005 % en poids à 10 % en poids, l'article ayant une résistance à la traction mesurée selon la norme ISO 527 au moins 15 % plus élevée par comparaison avec ledit article sans nanodiamants élaborés par détonation, dans lequel les nanodiamants élaborés par détonation présentent un potentiel zêta supérieur à +30 mV, de préférence supérieur à +40 mV et de préférence encore supérieur à +50 mV ou les nanodiamants élaborés par détonation présentent une valeur de potentiel zêta plus négative que -30 mV, de préférence plus négative que -40 mV et de préférence encore plus négative que -50 mV, le potentiel zêta étant mesuré comme indiqué dans la description.

8. Article imprimé en 3D selon la revendication 7, dans lequel ledit polymère thermoplastique comprend de l'acrylonitrile-butadiène-styrène, de la résine acrylique, du celluloïd, de l'acétate de cellulose, un copolymère d'oléfine cyclique, de l'éthylène-acétate de vinyle, de l'éthylène-alcool vinylique, des matières plastiques fluorées telles que du polytétrafluoroéthylène, des ionomères, un polymère à cristaux liquides, du polyoxyméthylène, des polyacrylates, du polyacrylonitrile, du polyamide, du polyamide-imide, du polyimide, de la polyaryléthercétone, du polybutadiène, du polybutylène, du poly(téréphtalate de butylène), de la polycaprolactone, du polychlorotrifluoroéthylène, de la polyétheréthercétone, du poly(téréphtalate d'éthylène), du polycyclohexylène, du polycarbonate, des polyhydroxyalcanoates, de la polycétone, du polyester, du polyéthylène, de la polyéthercétonecétone, du polyétherimide, de la polyéthersulfone, de la polysulfone, du polyéthylène chloré, du poly(acide lactique), du poly(méthacrylate de méthyle), du polyméthylpentène, du polyphénylène, du poly(oxyde de phénylène), poly(sulfure de phénylène), du polyphtalamide, du polypropylène, du polystyrène, de la polysulfone, du poly(téréphtalate de triméthylène), du polyuréthane, du poly(acétate de vinyle), du poly(chlorure de vinyle), du poly(chlorure de vinylidène) et du styrène-acrylonitrile, un quelconque élastomère thermoplastique ou les associations de ceux-ci ; de préférence le polymère thermoplastique est de l'acrylonitrile-butadiène-styrène (ABS), du poly(acide lactique) (PLA), du nylon, du polypropylène (PP), du polyéthylène (PE), du poly(téréphtalate d'éthylène) (PET) et du polycarbonate (PC), de préférence encore du poly(acide lactique).

9. Article imprimé en 3D selon l'une quelconque des revendications 7-8, dans lequel les nanodiamants élaborés par détonation sont en grande partie mono-fonctionnalisés avec des groupes soit amine, soit acide carboxylique, soit hydrogène soit hydroxyle.

10. Article imprimé en 3D selon l'une quelconque des revendications 7-9, l'article ayant une température de transition vitreuse (Tg) au moins 2 °C plus élevée par comparaison avec ledit article sans nanodiamants élaborés par détonation.

11. Article imprimé en 3D selon l'une quelconque des revendications 7-10, l'article ayant une conductivité thermique au moins 2 % plus élevée par comparaison avec ledit article sans nanodiamants élaborés par détonation.

12. Procédé pour la fabrication d'un produit imprimé en 3D, le procédé comprenant :
- la fusion d'un filament comprenant de la matière thermoplastique en une quantité allant de 80 % en poids à 99,99 % en poids et des nanodiamants élaborés par détonation en une quantité allant de 0,005 % en poids à 10 % en poids, les nanodiamants élaborés par détonation présentant un potentiel zêta supérieur à +30 mV, de préférence supérieur à +40 mV et de préférence encore supérieur à +50 mV ou les nanodiamants élaborés par détonation présentant une valeur de potentiel zêta plus négative que -30 mV, de préférence plus négative que -40 mV et de préférence encore plus négative que -50 mV, le potentiel zêta étant mesuré comme indiqué dans la description, dans une tête d'impression d'une imprimante 3D ; et
- le dépôt de la matière fondue dans une imprimante 3D en couches successives pour former un produit imprimé en 3D.
